# EUROPEAN PATENT APPLICATION

(11) **EP 2 595 058 A1**
(43) Date of publication of application: **22.05.2013**
(21) Application number: 10854700.1
(22) Date of filing: 13.07.2010
(51) Int. Cl.: G06F 9/50

(54) **MULTITHREAD PROCESSING DEVICE, MULTITHREAD PROCESSING SYSTEM, MULTITHREAD PROCESSING PROGRAM, AND MULTITHREAD PROCESSING METHOD**

(71) Applicant: Fujitsu Limited, Kawasaki-shi, Kanagawa 211-8588 (JP)
(72) Inventor: MIYOSHI, Takaaki, Kawasaki-shi Kanagawa 211-8588 (JP)
(74) Representative: HOFFMANN EITLE
(86) International application number: PCT/JP2010/061825
(87) International publication number: WO 2012/008016

(57) **Abstract**

Provided is a multithread processing device that includes a managing unit (21-1) that assigns a free thread among a plurality of threads to at least one of a plurality of processes, and a processing unit (21-2) that executes the one process to which the free thread is assigned by the managing unit (21-1), wherein, when a request is transmitted from a first process among the plurality of processes by the processing unit (21-2), the managing unit (21-1) releases a thread (42-1) assigned to the first process to be a free thread, and ends the first process, and when a response to the request is received by the processing unit (21-2), the managing unit (21-1) assigns a free thread to a second process of executing a process related to the response among the plurality of processes.

## Description

### PROCESSING METHOD

The present disclosure relates to a multithread processing device that performs a multithread process, a multithread processing system, a multithread processing program, and a multithread processing method.

### BACKGROUND

In communication of a client-server type that is currently in popular use, a program on a server terminal executes a predetermined process on a request such as a data provision request transmitted from a program on a client terminal, and transmits a response. Through this operation, the program on the client terminal can continue a process related to the request based on content of the response received from the program on the server terminal.

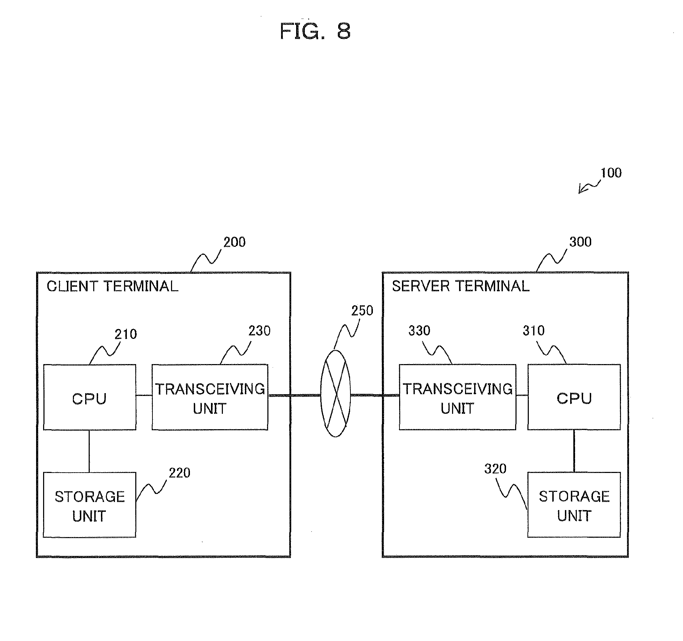

Fig. 8 is a diagram illustrating a configuration example of a system 100 that performs general client-server communication.
A client terminal 200 and a server terminal 300 are connected to perform communication with each other via a network 250, and the server terminal 300 transmits a response to the client terminal 200 on a request from the client terminal 200 to the server terminal 300.

The client terminal 200 can execute a multithread process, and includes a central processing unit (CPU) 210 that executes a corresponding process, a storage unit 220, and a transceiving unit 230.
The CPU 210 reads a program stored in the storage unit 220 and performs a predetermined multithread process.

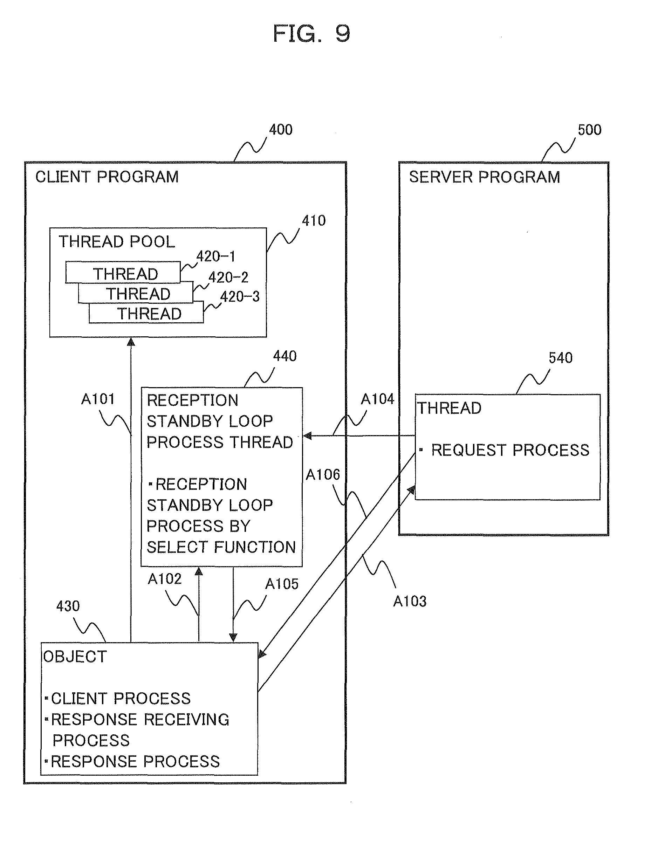

The storage unit 220 includes a storage area for storing various kinds of data and programs, and when the CPU 210 executes a program, a program stored in the storage area is read, or data or a program is stored or developed in the storage area.
Here, the storage unit 220 stores a client program 400 serving as a multithread program using an object, which will be described later with reference to Fig. 9, and the CPU 210 reads the client program 400 and then executes a multithread process.

The server terminal 300 includes a CPU 310, a storage unit 320, and a transceiving unit 330.
The CPU 310 reads a program stored in the storage unit 320 and performs a predetermined process.
The storage unit 320 includes a storage area for storing various kinds of data and programs, similarly to the storage unit 220.

Here, the storage unit 320 stores a server program 500 which will be described later with reference to Fig. 9, and a process in the server terminal 300 is executed by the CPU 310.
The transceiving units 230 and 330 perform two-way data transmission and reception between the client terminal 200 and the server terminal 300.
The transceiving unit 230 transmits a request from the CPU 210 to the server terminal 300, receives a response from the server terminal 300, and transfers the response to the CPU 210.

The transceiving unit 330 receives the request from the client terminal 200, transfers the request to the CPU 310, and transmits the response from the CPU 310 to the client terminal 200.
Fig. 9 is a diagram illustrating a configuration example of the client program 400 and the server program 500.

The client program 400 is a program that operates under control of a multithread operating system (OS), stored in the storage unit 220 of the client terminal 200, and read from the storage unit 220 and executed by the CPU 210 as described above.
The client program 400 includes a thread pool 410, an object 430, and a reception standby loop process thread 440.

The thread pool 410 stores a thread used in a process by the client program 400, and is generated by the client program 400. The client program 400 generates a predetermined number (here, three) of threads 420-1 to 420-3 in the process of generating the thread pool 410.
In the following, as a reference numeral representing a thread, reference numerals 420-1 to 420-3 are used when it is necessary to specify one of a plurality of threads, but a reference numeral 420 is used when an arbitrary thread is designated.

The object 430 is an object including a client process, a response receiving process, and a response process.
Here, the client process is not only a process in the client program 400 but also a process in which the request is transmitted to the server program 500 of the server terminal 300. The response receiving process is a process in which the response which is transmitted from the server program 500 on the request transmitted in the client process is received. The response process is a process that is executed in the client program 400 in connection with the response received in the response receiving process.

The reception standby loop process thread 440 is a thread that executes a reception standby loop process by a select function.
In the following, the reception standby loop process thread 440 is also referred to simply as a "thread 440".
Specifically, the thread 440 receives data representing a transmission start of the response from a thread 540 of the server program 500. When it is determined that the data representing the transmission start of the response has been received from the server program 500 or when a timeout occurs, the select function ends, that is, control is returned to the thread 440.

Here, the process included in the object 430 or the reception standby loop process by the select function is executed such that the client program 400 assigns a thread in a non-use state (hereinafter referred to as a "free thread") among the threads 420 in the thread pool 410 to the process. Thus, the process included in the object 430 or the reception standby loop process by the select function is executed in the thread assigned thereto.

In the following, the thread 420-1 is assumed to be assigned to the object 430.
Further, the thread 420-2 is assumed to be assigned to the reception standby loop process by the select function. Thus, for the sake of convenience, the reception standby loop process thread 440 is denoted by a reference numeral 440, but the reception standby loop process thread is actually the thread 420-2 that is included in the thread pool. Hereinafter, the reception standby loop process thread 440 is also referred to as the thread 420-2.

The server program 500 is stored in the storage unit 320 of the server terminal 300, and read from the storage unit 320 and executed by the CPU 310 as described above.
The server program 500 includes the thread 540 that executes a request process.
The thread 540 receives the request transmitted from the client program 400, executes a predetermined process on the request, and transmits the response that is a processing result of the request to the client program 400.

Further, before transmitting the response to the client program 400, the thread 540 transmits data representing a transmission start of the response to the reception standby loop process thread 440 of the client program 400. After transmission of the data, the response to the request is transmitted to the object 430 of the client program 400.

Next, operations of the client program 400 and the server program 500 will be described.
The client program 400 borrows a free thread from the thread pool 410 when the object 430 having the client process, the response receiving process, and the response process are generated. Then, the client program 400 associates the object 430 with the borrowed thread (here, the thread 420-1) (see A101 in Fig. 9) and executes the client process in the object 430.

In the client process, the thread 420-1 instructs the reception standby loop process thread 440 (the thread 420-2) that performs the reception standby loop process by the select function to start the reception (see A 102 in Fig. 9). Then, the thread 440 executes a reception standby loop process of the response from the server program 500.
Thereafter, the thread 420-1 that executes the client process included in the object 430 transmits an arbitrary request to the server program 500 (see A103 in Fig. 9).

The thread 540 of the server program 500 is on standby for transmission of an arbitrary request from the client program 400, and receives the transmitted request. The thread 540 interprets the received request, and an arbitrary process corresponding to the request is executed by the thread 540 that performs the request process.
Next, the server program 500 transmits data representing a transmission start to the client program 400 in order to transmit a result of the request process to the client program 400 (see A104 in Fig. 9).

The client program 400 receives the data representing the transmission start through the reception standby loop process thread 440, and notifies the thread 420-1 associated with the object 430 of this fact (see A105 in Fig. 9).
After transmitting the data representing the transmission start to the client program 400, the server program 500 transmits an execution result of the request process to the client program 400 as the response to the request (see A106 in Fig. 9).

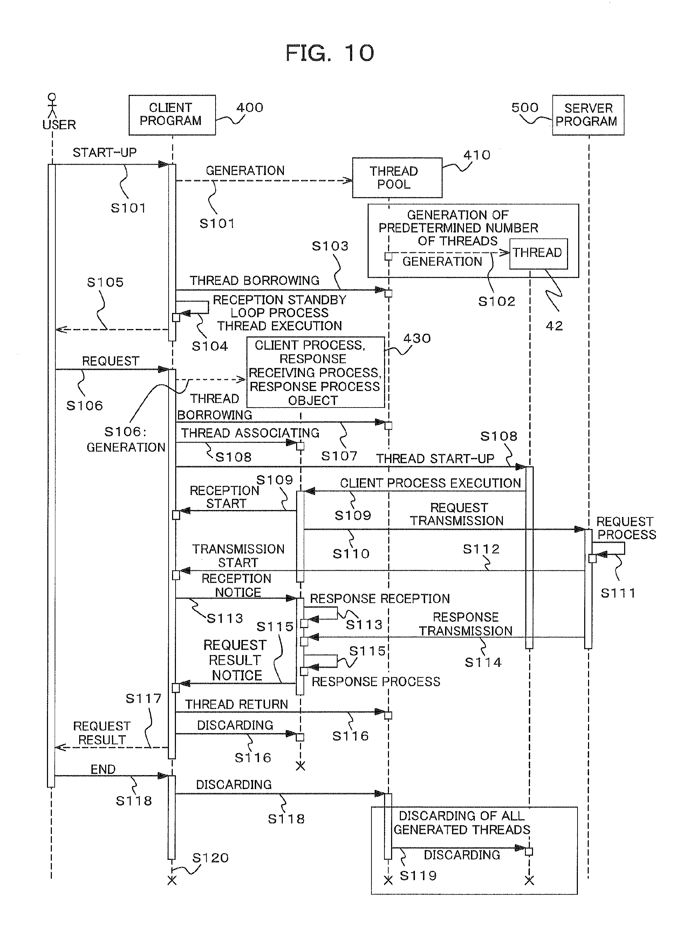

The client program 400 receives the response through the thread 420-1 associated with the object 430, and performs the process on the response.
Next, a detailed process in the client program 400 and the server program 500 will be described with reference to Fig. 10.
Fig. 10 is a sequence diagram for describing the process of the client program 400 and the server program 500.

First, when the client program 400 is started up by a user, the thread pool 410 is generated by the client program 400 (step S101). Further, in the thread pool 410, a predetermined number of threads 420 are generated in the process of generation thereof (step S102). For example, in the example illustrated in Fig. 9, three threads. i.e., the threads 420-1 to 420-3, are generated by the client program 400.

Then, the client program 400 borrows one free thread from the thread pool 410 (step S103). The client program 400 executes the reception standby loop process by the select function through the borrowed thread (here, the thread 420-2; the reception standby loop process thread 440), and enters a reception start instruction standby state (step S104). Thereafter, the process of the client program 400 ends, and control is returned to the user (step S 105).

Next, when the user makes an arbitrary request to the client program 400, the client program 400 generates the object 430 having the client process, the response receiving process, and the response process (step S106).
Further, the client program 400 borrows one free thread 420 from the thread pool 410 (step S107). Then, the client program 400 associates the object 430 generated in step S 106 with the free thread borrowed in step S 107, and causes the associated thread (here, the thread 420-1) to start up (step S108).

Next, the thread 420-1 associated with the object 430 executes the client process, and instructs the reception standby loop process thread 440 in the reception start instruction standby state to start the reception (step S109).
Then, the thread 420-1, which executes the client process, included in the object 430 transmits the request to the server program 500 (step S 110).

The server program 500 receives the request, and the thread 540 executes an arbitrary process on the request (step S111).
In the server program 500, when the process on the request by the thread 540 ends, the server program 500 notifies the client program 400 of the transmission start of the response (step S112).

Meanwhile, when the client program 400 is notified of the transmission start, this fact is transferred to the thread 420-1 associated with the object 430, which had executed the client process. Then, the thread 420-1 executes the response receiving process of the object 430 (step S 113).
Next, the server program 500 transmits the response to the client program 400 (step S 114).

When the thread 420-1 completes the reception of the response by the response receiving process, the thread 420-1 executes an arbitrary process (a response process) related to the received response. Then, the thread 420-1 notifies the client program 400 of the result of the request (step S115).
Thereafter, the client program 400 returns the borrowed threads 420-1 and 420-2 (the reception standby loop process thread 440) to the thread pool 410. Further, the client program 400 deletes (discards) the object 430 having the client process, the response receiving process, and the response process from the resources of the client terminal 200 such as the storage unit 220 (step S116).

Finally, the client program 400 transfers the result of the request to the user (step S 117).
Further, when the user ends the client program 400, the client program 400 discards the thread pool 410 (step S118). Here, the thread pool 410 discards all threads generated in step S 102 in the discarding process (step S 119).

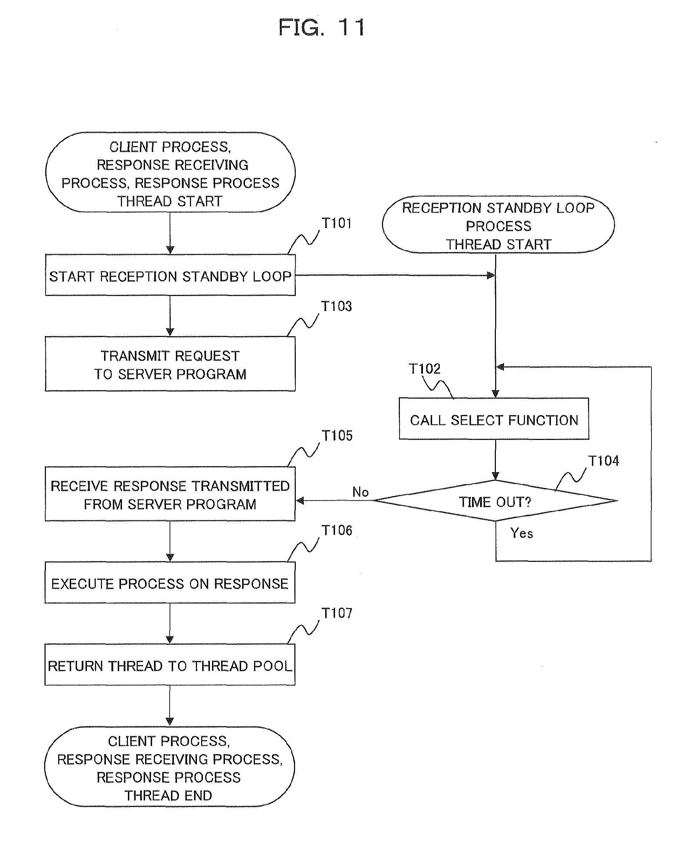

Then, the execution of the client program 400 ends, and the client program 400 itself is discarded (step S120).
The request and response process is performed between the client terminal 200 and the server terminal 300 as described above.
Next, the process (steps S108 to S116 in Fig. 10) until the thread 420-1 is discarded after it starts up in the process of the threads 420-1 and 420-2 (the reception standby loop process thread 440) will be described in further detail with reference to Fig. 11.

Fig. 11 is a flowchart for describing the process of the thread 420-1 that performs the client process, the response receiving process, and the response process and the thread 420-2 (the reception standby loop process thread 440) that performs the reception standby loop process in the client program 400.
First, when the client process of the object 430 is executed by the thread 420-1 in step S 109 of Fig. 10, the reception standby loop process thread 440 in the reception start instruction standby state is instructed to start the reception (step T101 of Fig. 11).

Next, in the reception standby loop process thread 440 instructed to start the reception by the thread 420-1, the select function is on standby for the data representing the transmission start of the response transmitted from the server program 500 until a designated timeout time (step T102). In other words, the select function waits for data representing that the response can be received from the server program 500.

Then, in the thread 420-1, when the reception standby loop process thread 440 is instructed to start the reception, the thread 420-1 transmits the request to the server program 500 (step T103).
The reception standby loop process thread 440 determines whether or not the recovery from the select function is caused by a timeout (step T104).

When it is determined that the recovery from the select function is made by the timeout, the reception standby loop process thread 440 calls the select function again and enters the reception standby state (Yes route in step T104).
On the other hand, when it is determined that the recovery from the select function is made because the reception of the response becomes possible by non-blocking (No route in step T104), the reception standby loop process thread 440 gives a response reception notice to the thread 420-1 (see A105 in Fig. 9). Here, the reception by non-blocking refers to reception of a response that is performed while first performing another process that can be performed without waiting for reception of a response.

Next, the response receiving process of the object 430 is performed by the thread 420-1 that has received the response reception notice in the No route in step T104 (step T105). Then, the thread 420-1 executes the response process of the object 430 on the response (step T106).
When the thread 420-1 ends the response process, the client program 400 returns the borrowed threads 420-1 and 420-2 to the thread pool 410. Further, the client program 400 discards the object 430, which executes the client process, the response receiving process, and the response process, associated with the thread 420-1 (step T107).

The thread 420-1 associated with the object 430 ends through the above-described process.
Further, as related art, a technique in which a process in a server system associates a session identifier with a request from a client system, and the server transmits a response including the session identifier to the client system has been known (for example, Patent Literature 1).

In addition, a technique in which a new thread is generated in a database server when a session starts, execution of a process is assigned to a session, and a thread of a session ends unless a session continuation destination is made at the time of return to a client has been known (for example, Patent Literature 2).

### Citation List

### Patent Literature

Patent Literature 1: Japanese National Publication of International Patent Application No. 11-510632
Patent Literature 2: Japanese Laid-open Patent Publication No. 11-149449
Patent Literature 3: Japanese Laid-open Patent Publication No. 2000-29815

### SUMMARY OF THE INVENTION

### PROBLEMS TO BE SOLVED BY THE INVENTION

In order to control the quantity of the storage area of the storage unit 220 used by the client program 400, the client program 400 may control the number of threads 420 managed by the thread pool 410 to, for example, two or three.
In this case, the client program 400 does not use the object 430 having the client process, the response receiving process, and the response process while waiting for transmission of the response from the server program 500 through the reception standby loop process thread 440. For this reason, there is a problem in that the storage area storing the object 430 is uselessly in an in-use state during that time.

In addition, the thread 420-1 associated with the object 430 having the client process, the response receiving process, and the response process does not execute any processes, and thus the thread borrowed from the thread pool 410 is not effectively used. For this reason, there is a problem in that a processing performance of the client program 400 is not improved.
The techniques discussed in Patent Literatures 1 to 3 relate to management of a session and a thread at the server terminal side, and thus it is difficult to solve the above problems at the client terminal side by the techniques.

The problems occurring in the client terminal 200 in communication of the client-server type have been described with reference to Figs. 8 to 11, but are not limited thereto.
For example, it is similar when a program operating on a certain terminal transmits a request to another thread of the own program, another program of the own terminal, or the like, and a response is transmitted from another thread or the like. In other words, there is a problem in that, until the response is transmitted from another thread or the like, after the request is transmitted, the storage area that stores an object having a client process, a response receiving process, and a response process in the program that has transmitted the request is uselessly in the in-use state.

In addition, a thread associated with the object having a client process, a response receiving process, and a response process in the program that has transmitted the request does not execute any processes, and thus the thread borrowed from the thread pool is not effectively used. For this reason, there is a problem in that a processing performance of the program that has transmitted the request is not improved.

In light of the foregoing, it is an object of the present disclosure to promote an effective use of a storage area storing a process and a thread associated with a process and to achieve an improvement in a processing performance of a program.
Note that, the present disclosure is not limited to the above object, and effects that are derived by components described in an embodiment for implementing the invention which will be described later but not obtained by the related arts may be regarded as another object of the present invention.

### MEANS TO SOLVE THE PROBLEMS

A multithread processing device according to the present disclosure includes a managing unit that assigns a free thread among a plurality of threads to at least one of a plurality of processes and a processing unit that executes the one process to which the free thread is assigned by the managing unit. When a request is transmitted from a first process among the plurality of processes by the processing unit, the managing unit releases a thread assigned to the first process to be a free thread, and ends the first process. When a response to the request is received by the processing unit, the managing unit assigns a free thread to a second process of executing a process related to the response among the plurality of processes.

A multithread processing system according to the present disclosure includes the multithread processing device and another device connected to perform communication with the multithread processing device, wherein the processing unit transmits the request to the other device, and the other device transmits the response to the request received from the processing unit to the multithread processing device.

A multithread processing program according to the present disclosure causes a computer to function as a managing unit that assigns a free thread among a plurality of threads to at least one of a plurality of processes and a processing unit that executes the at least one process to which the free thread is assigned by the managing unit, wherein, when a request is transmitted from a first process among the plurality of processes by the processing unit, the managing unit releases a thread assigned to the first process to be a free thread, and ends the first process, and when a response to the request is received by the processing unit, the managing unit assigns a free thread to a second process of executing a process related to the response among the plurality of processes.

A multithread processing method according to the present disclosure is a multithread processing method of assigning a free thread among a plurality of threads to at least one process of a plurality of processes and executing the at least one process to which the free thread is assigned and includes, when a request is transmitted from a first process among the plurality of processes, releasing a thread assigned to the first process to be a free thread and ending the first process, and when a response to the request is received, assigning a free thread to a second process of executing a process related to the response among the plurality of processes.

### EFFECT OF THE INVENTION

According to the technique of the disclosure, it is possible to promote an effective use of a storage area storing a process and a thread associated with a process and to achieve an improvement in a processing performance of a program.

### BRIEF DESCRIPTION OF DRAWINGS

Fig. 1 is a diagram schematically illustrating a configuration example of a system that performs client-server communication according to an example of a first embodiment.
Fig. 2 is a diagram illustrating a configuration example of a client program and a server program according to an example of the first embodiment.
Fig. 3 is a sequence diagram for describing a process of a client program and a server program.
Fig. 4 is a flowchart for describing a process in a thread of a client program.
Fig. 5 is a diagram illustrating a configuration example of a client program and a server program according to a modified example of the first embodiment.
Fig. 6 is a sequence diagram for describing a modified example of a process of a client program and a server program.
Fig. 7 is a flowchart for describing a modified example of a process in a thread in a client program.
Fig. 8 is a diagram illustrating a configuration example of a system that performs general client-server communication.
Fig. 9 is a diagram illustrating a configuration example of a client program and a server program.
Fig. 10 is a sequence diagram for describing a process of a client program and a server program.
Fig. 11 is a flowchart for describing a process in a thread in a client program.

### Description of Embodiments

Hereinafter, exemplary embodiments of the present invention will be described with reference to the accompanying drawings.

### (A) First Embodiment

### (A-1) Configuration of First Embodiment

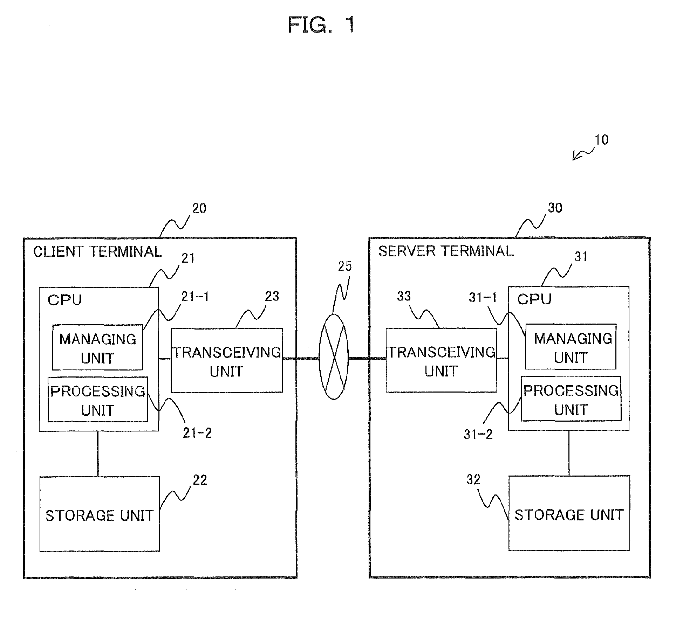

Fig. 1 is a diagram schematically illustrating a configuration example of a system 10 that performs a client-server communication as an example of a first embodiment.

As illustrated in Fig. 1, the system 10 includes a client terminal 20 and a server terminal 30, similarly to the system 100 of Fig. 8 described above. The client terminal 20 and the server terminal 30 are connected to perform communication with each other via a network 25, and on a request from the client terminal 20 to the server terminal 30, the server terminal 30 transmits a response to the client terminal 20.

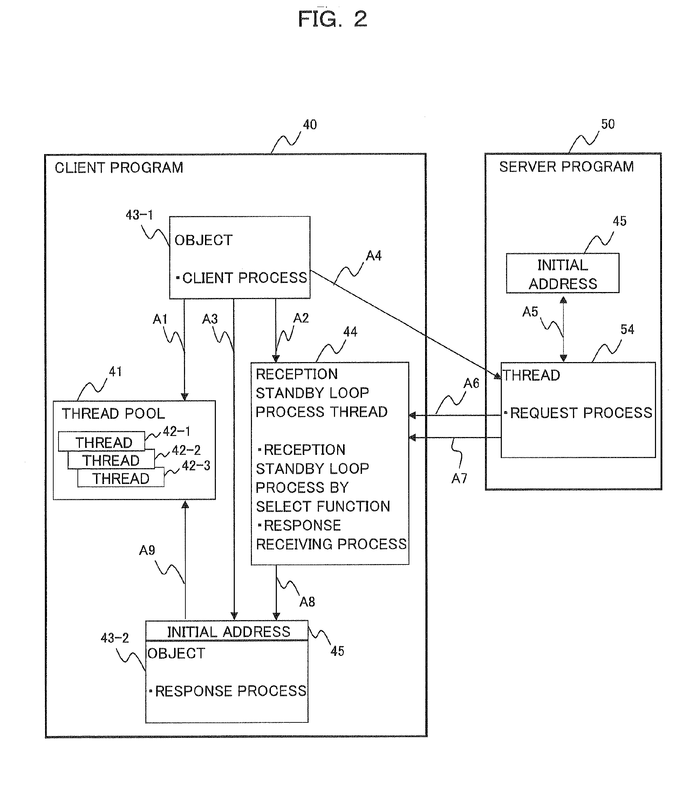

The client terminal 20 can execute a multithread process and includes a CPU 21, a storage unit 22, and a transceiving unit 23, similarly to the client terminal 200 of Fig. 8 described above.
The CPU 21 reads out a client program 40 (see Fig. 2) stored in the storage unit 22 and performs a predetermined multithread process, and includes a managing unit 21-1 and a processing unit 21-2.

The managing unit 21-1 generates and manages a thread pool 41 (see Fig. 2) after the client program 40 starts up, and generates and manages a designated number of threads in the generated thread pool 41. The managing unit 21-1 discards all of the designated number of generated threads and discards the thread pool 41 after the client program 40 ends.

The managing unit 21-1 develops (generates) an arbitrary object in a storage area of the storage unit 22 and deletes (discards) an object from the storage area.
In addition, the managing unit 21-1 assigns a free thread among a plurality of threads in the thread pool 41 to at least one of a plurality of objects. For example, the storage area of the storage unit 22 may include a management table in which each thread is associated with a flag representing whether or not a thread in the thread pool 41 is a free thread, and the managing unit 21-1 may assign a free thread to an object with reference to the management table. In this case, when an object is assigned to the free thread, the managing unit 21-1 changes a flag of the thread assigned to the object in the management table from a flag representing the free thread to a flag representing that the thread is borrowed.

The processing unit 21-2 executes a predetermined process in the client program 40. In the present embodiment, the processing unit 21-2 executes a process in a thread to which a process or the like is assigned by the managing unit 21-1.
The storage unit 22 includes a storage area storing various kinds of data and programs, and when the CPU 21 executes a program, a program stored in the storage area is read, or data or a program is stored or developed in the storage area.

Here, the storage unit 22 stores the client program 40 serving as a multithread program using an object having a predetermined process, which will be described later with reference to Fig. 2, and the multithread process is executed by the CPU 21.
The server terminal 30 includes a CPU 31, a storage unit 32, and a transceiving unit 33, similarly to the server terminal 300 illustrated in Fig. 8 described above.

The CPU 31 reads a server program 50 stored in the storage unit 32, which will be described later, and performs a predetermined process.
The storage unit 32 includes a storage area for storing various kinds of data and programs, similarly to the storage unit 22.
Here, the storage unit 32 stores the server program 50 which will be described later with reference to Fig. 2, and a process in the server terminal 30 is executed by the CPU 31.

For example, a random access memory (RAM) may be used as the storage units 22 and 32.
The transceiving units 23 and 33 perform two-way data transmission and reception between the client terminal 20 and the server terminal 30.
The transceiving unit 23 transmits a request from the CPU 21 to the server terminal 30, receives a response from the server terminal 30, and transfers the response to the CPU 21.

The transceiving unit 33 receives the request from the client terminal 20, transfers the request to the CPU 31, and transmits the response from the CPU 31 to the client terminal 20.
Each of the transceiving units 23 and 33 includes a buffer memory (not illustrated) that temporarily stores received data or data to transmit.

Fig. 2 is a diagram illustrating a configuration example of the client program 40 and the server program 50.
The client program 40 is a program that operates under control of a multithread OS stored in the storage unit 22 of the client terminal 20, and read from the storage unit 22 and executed by the CPU 21 as described above.

The client program 40 includes a thread pool 41, objects 43-1 and 43-2, and a reception standby loop process thread 44.
The thread pool 41 generates and manages a plurality of threads used in a process by the client program 40, and is generated by the managing unit 21-1 after the client program 40 starts up. The client program 40 generates a predetermined number (here, three) of threads 42-1 to 42-3 in the process of generating the thread pool 41.

The thread pool 41 is included in the managing unit 21-1.
The object 43-1 is an object that includes a process in the client program 40 and has a client process of transmitting a request to the server program 50 of the server terminal 30.
Thus, the object 43-1 is an object corresponding to the client process of the object 430 of Fig. 9 described above.

In the present embodiment, the object 43-1 further includes a process of adding identification information, which is used to identify the object 43-2 that executes the response process, to the request to be transmitted to the server program 50. In the present embodiment, the object 43-1 uses an initial address 45 of the object 43-2 that executes the response process on the storage area of the storage unit 22 as the identification information.

The object 43-2 is an object that executes the response process, which is a process executed in the client program 40, in connection with the response received through the response receiving process.
Thus, the object 43-2 is an object corresponding to the response process of the object 430 of Fig. 9 described above.

In the following, as a reference numeral representing a thread, reference numerals 42-1 to 42-3 are used when it is necessary to specify one of a plurality of threads, but a reference numeral 42 is used when an arbitrary thread is designated. Further, as a reference numeral representing a thread (sic; correctly "an object"), reference numerals 43-1 and 43-2 are used when it is necessary to specify one of a plurality of objects, but a reference numeral 43 is used when an arbitrary object is designated.

The reception standby loop process thread 44 is a thread that executes the reception standby loop process by the select function and executes the response receiving process.
Thus, the response receiving process of the object 430 of Fig. 9 described above is executed by the reception standby loop process thread 44.
Hereinafter, the reception standby loop process thread 44 is also referred to simply as a thread 44.

Specifically, the thread 44 receives data representing a transmission start of a response from a thread 54 of the server program 50, and receives the response.
When it is determined that the data representing the transmission start of the response has been received from the server program 50 or when a timeout occurs, the select function ends, that is, control is returned to the thread 44.

The thread 44 receives the response from the server program 50 on the request transmitted in the client process as the response receiving process.
In the present embodiment, the thread 44 extracts the initial address 45 of the object 43-2 added to the response by the server program 50 as will be described later. The thread 44 borrows a free thread from the thread pool 41, associates the thread with the extracted initial address 45 of the object 43-2 that performs the response process, and executes the thread 42-3 that performs the response process.

The process by the thread 44 is executed such that the free thread in the thread pool 41 is assigned to the reception standby loop process by the select function through the client program 40. The process by the thread 44 is executed before the request transmission process by the thread 42-1 associated with the object 43-1 starts.

In the following description, the managing unit 41-1 (sic; correctly "21-1") is assumed to assign the thread 42-1 to the object 43-1 and assign the thread 42-3 to the object 43-2. In addition, in the following description, the managing unit 21-1 is assumed to assign the thread 42-2 in the thread pool 41 to the reception standby loop process by the select function and the response receiving process. Thus, for the sake of convenience, the reception standby loop process thread 44 is denoted by a reference numeral 44, but the reception standby loop process thread is actually the thread 42-2 that is included in the thread pool. Hereinafter, the reception standby loop process thread 44 is also referred to as the thread 42-2.

The server program 50 is stored in the storage unit 32 of the server terminal 30, and read from the storage unit 32 and executed by the CPU 31 as described above.
The server program 50 includes the thread 54 that executes the request process.
The thread 54 receives the request transmitted from the client program 40, extracts the initial address 45 of the object 43-2 added to the request, and stores the initial address 45 in the storage unit 32. Further, the thread 54 adds the initial address 45 of the object 43-2 stored in the storage unit 32 to the response that is the processing result of the request, and transmits the resultant response to the reception standby loop process thread 44.

In addition, before transmitting the response to the client program 40, the thread 54 transmits data representing a transmission start of the response to the reception standby loop process thread 44 of the client program 40. After transmitting the data, the thread 54 transmits the response including the initial address 45 of the object 43-2 to the reception standby loop process thread 44.

### (A-2) Operation of First Embodiment

Next, an operation of the client program 40 and the server program 50 will be described.
When the object 43-1 having the client process is generated, the client program 40 borrows the free thread from the thread pool 41. Then, the client program 40 associates the object 43-1 with the borrowed thread (here, the thread 42-1) (see A1 in Fig. 2), and executes the client process in the object 43-1.

In the client process, the thread 42-1 instructs the reception standby loop process thread 44 (the thread 42-2) that performs the reception standby loop process by the select function to start the reception (see A2 in Fig. 2). Then, the thread 44 executes a reception standby loop process of the response, by the select function, from the server program 50.
In addition, the thread 42-1 that executes the client process acquires the initial address 45 of the object 43-2 having the response process on the storage area, and adds the acquired initial address 45 to arbitrary request data to be transmitted to the server program 50 (see A3 in Fig. 2).

Thereafter, the thread 42-1 transmits the arbitrary request including the initial address 45 to the server program 50 (see A4 in Fig. 2).
The thread 54 of the server program 50 is on standby for transmission of the arbitrary request from the client program 40, receives the transmitted request, and extracts the initial address 45 added to the request. The thread 54 interprets the received request, and the arbitrary process corresponding to the request is executed by the thread 54 that performs the request process. In addition, the thread 54 adds the extracted initial address 45 to the response that is the result of the request process (see A5 in Fig. 2).

Next, in order to transmit the response to the client program 40, the thread 54 transmits data representing a transmission start to the client program 40 (see A6 in Fig. 2).
Then, after transmitting the data representing the transmission start to the client program 40, the thread 54 transmits the response including the initial address 45 to the client program 40 (see A7 in Fig. 2).

In the client program 40, the reception standby loop process thread 44 receives the data representing the transmission start. Then, the thread 44 receives the response including the initial address 45 in the response receiving process, and acquires the object 43-2 from the initial address 45 added to the received response (see A8 in Fig. 2).
In addition, the thread 44 borrows a free thread from the thread pool 41. Then, the thread 44 associates the acquired object 43-2 with the borrowed thread (here, the thread 42-3) (see A9 in Fig. 2).

Thereafter, the client program 40 executes the response process in the object 43-2 associated with the thread 42-3 as described above.
Here, the managing unit 21-1, the processing unit 21-2 and the like in the client terminal 20 and the server terminal 30 execute the above-described process in the client program 40 and the server program 50 as follows.

When the client program 40 starts up, the managing unit 21-1 generates the thread pool 41 and generates a predetermined number of threads 42. Thereafter, the managing unit 21-1 manages the threads 42 in the thread pool 41, and assigns a corresponding process to a free thread when the processing unit 21-2 executes the client process (a first process), the response process (a second process), the reception standby loop process, the response receiving process, and the like.

Before the processing unit 21-2 transmits the request in the thread 42-1, the managing unit 21-1 assigns the free thread 42-2 to a process of receiving the response to the request as the reception standby loop process thread 44.
Further, before transmitting the request, the processing unit 21-2 starts the process of receiving the response through the reception standby loop process thread 44 (the thread 42-2).

Then, the processing unit 21-2 adds identification information used to identify (specify) the response process (the second process) in the process of the thread 42-1, that is, in the present embodiment the initial address 45 of the object 43-2 having the response process, and then transmits the request.
When the processing unit 21-2 transmits the request from the client process (the first process), the managing unit 21-1 releases the thread 42-1 assigned to the client process, and uses the released thread 42-1 as the free thread. In other words, the managing unit 21-1 releases association between the object 43-1 having the client process and the thread 42-1. Then, the managing unit 21-1 ends the client process (the first process). In other words, the managing unit 21-1 deletes the object 43-1 having the client process from the storage area of the storage unit 22.

Meanwhile, the server program 50 serving a transmission destination of the request adds the identification information added to the request to the response, and transmits the resultant response to the processing unit 21-2.
When the processing unit 21-2 receives the response to the request, the managing unit 21-1 assigns a free thread to the response process (the second process) of executing the process related to the response among a plurality of processes based on the identification information added to the response received by the processing unit 21-2. In other words, the managing unit 21-1 assigns the object 43-2 having the response process to the free thread 42-3.

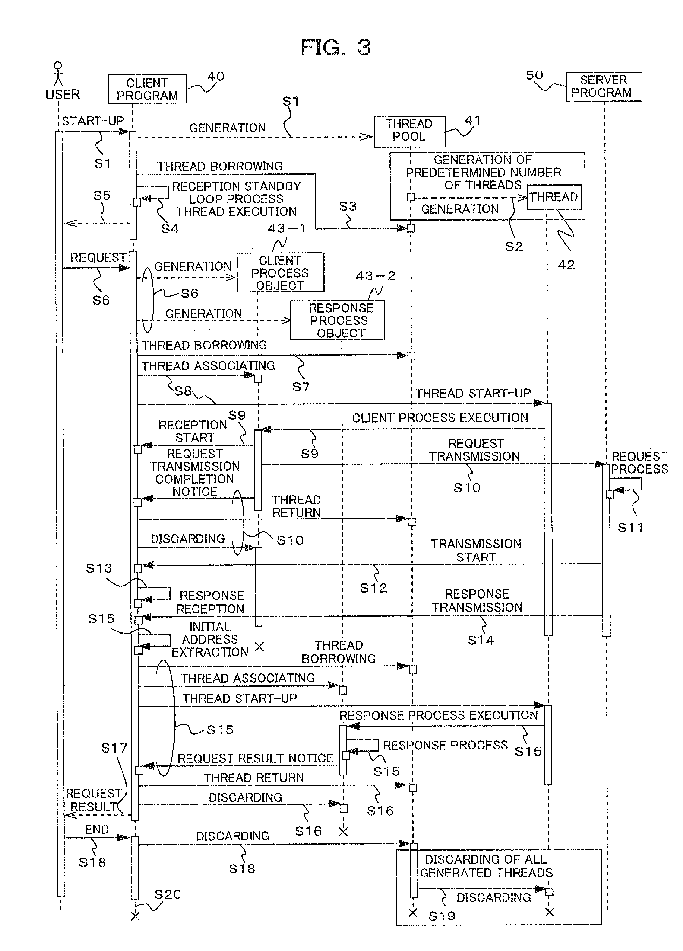

Next, a detailed process in the client program 40 and the server program 50 will be described with reference to Fig. 3.
Fig. 3 is a sequence diagram for describing the process of the client program 40 and the server program 50.
First, when the client program 40 is started up by the user, the client program 40 generates the thread pool 41 (step S1). Further, in the thread pool 41, a predetermined number of threads 42 are generated in the process of generation thereof (step S2). For example, in the example illustrated in Fig. 2, the client program 40 generates the three threads 42-1 to 42-3.

Then, the client program 40 borrows one free thread from the thread pool 41 (step S3). The client program 40 executes the reception standby loop process by the select function through the borrowed thread (here, the thread 42-2; the reception standby loop process thread 44), and enters the reception start instruction standby state (step S4). Thereafter, the process of the client program 40 ends, and control is returned to the user (step S5).

Next, when the user makes an arbitrary request to the client program 40, the client program 40 generates the object 43-1 having the client process and the object 43-2 having the response process (step S6).
Further, the client program 40 borrows one free thread 42 from the thread pool 41 (step S7). Then, the client program 40 associates the object 43-1 having the client process generated in step S6 with the free thread borrowed in step S7, and causes the associated thread (here, the thread 42-1) to start up (step S8).

Next, the thread 42-1 associated with the object 43-1 executes the client process, and instructs the reception standby loop process thread 44 in the reception start instruction standby state to start the reception (step S9).
Then, the thread 42-1, which executes the client process, included in the object 43-1 transmits the request to the server program 50 (step S10).

At this time, in the present embodiment, the thread 42-1 adds the initial address 45 of the object 43-2 having the response process to the request, transmits the resultant request, and when the transmission is completed, the thread 42-1 notifies the client program 40 of the request transmission completion. When the request transmission completion has been notified of, the client program 40 returns the borrowed thread 42-1 to the thread pool 41, and discards the generated object 43-1.

Through this operation, the client program 40 may cause the storage area of the storage unit 22 in which the object 43-1 is developed to be used by another process. Further, since the thread 42-1 associated with the object 43-1 is returned and thus becomes the free thread, the client program 40 may assign the thread 42-1 to another process.

Next, the server program 50 receives the request, and the thread 54 executes the arbitrary process on the request (step S 11).
At this time, in the present embodiment, the thread 54 extracts the initial address 45 of the object 43-2 having the response process added to the received request, and temporarily holds the extracted initial address 45 in the storage unit 32 of the server terminal 30 or the like.

In the server program 50, when the process on the request by the thread 54 ends, the server program 50 notifies the client program 40 of the transmission start of the response (step S12).
Meanwhile, when the client program 40 is notified of the transmission start, this fact is transferred to the thread 42-2 (the reception standby loop process thread 44) that executes the response receiving process. Then, in the client program 40, the reception standby loop process thread 44 executes the response receiving process (step S13).

Next, the thread 54 of the server program 50 transmits the response to the client program 40 (step S 14).
At this time, in the present embodiment, the thread 54 extracts the initial address 45 of the object 43-2 having the response process that is temporarily held in the storage unit 32 or the like, adds the initial address 45 to the response, and transmits the response. In the present embodiment, when the thread 44 completes the reception of the response, the thread 44 extracts the initial address 45 of the object 43-2 having the response process from the received response and acquires the object 43-2. Further, the thread 44 borrows a free thread from the thread pool 41 and associates the acquired object 43-2 with the free thread (here, the thread 42-3). In addition, the thread 44 causes the thread 42-3 to start up. Then, the thread 42-3 executes an arbitrary response process, and notifies the client program 40 of the result of the response process (step S 15).

Thereafter, the client program 40 returns the borrowed thread 42-3 to the thread pool 41. Further, the client program 40 deletes (discards) the object 43-2 having the response process from the storage area of the storage unit 22, that is, the resources of the client terminal 20 (step S16).
Finally, the client program 40 transfers the result of the request to the user (step S17).

Further, when the user ends the client program 40, the client program 40 discards the thread pool 41 (step S18). Here, the thread pool 41 discards all threads generated in step S2 in the discarding process (step S19).
Then, the execution of the client program 40 ends, and the client program 40 itself is discarded (step S20).

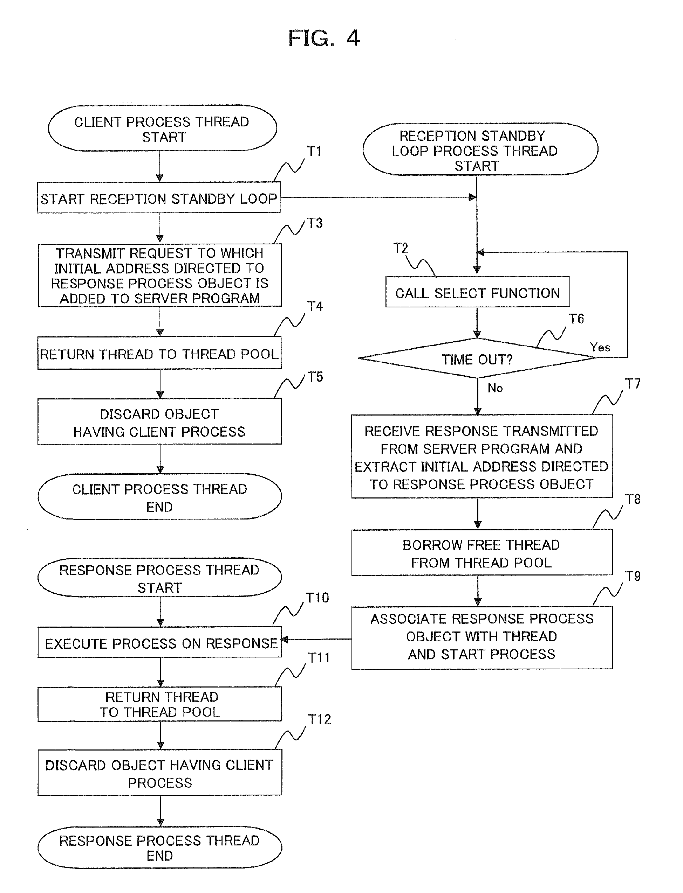

In the present embodiment, the request and response process are performed between the client terminal 20 and the server terminal 30 as described above.
Next, the process (steps S8 to S16 in Fig. 3) until the thread 42-3 is discarded after the thread 42-1 starts up in the process of the threads 42-1 to 42-3 will be described in further detail with reference to Fig. 4.

Fig. 4 is a flowchart for describing the process of the thread 42-1 performing the client process, the thread 42-2 (the reception standby loop process thread 44) performing the reception standby loop process, and the thread 42-3 performing the response process in the client program 40.
First, when the client process of the object 43-1 starts by the thread 42-1 in step S9 of Fig. 3, the reception standby loop process thread 44 in the reception start instruction standby state is instructed to start the reception (step T1 of Fig. 4).

Next, in the reception standby loop process thread 44 instructed to start the reception by the thread 42-1, the select function is on standby for the data representing the transmission start of the response transmitted from the server program 50 until a designated timeout time (step T2). In other words, the select function is on standby for data representing that the reception of the response can be received from the server program 50.

Then, in the thread 42-1, when the reception standby loop process thread 44 is instructed to start the reception, the thread 42-1 transmits the arbitrary request to the server program 50 (step T3).
At this time, the thread 42-1 adds the initial address 45 of the object 43-2 having the response process to the request, transmits the resultant request, and notifies the client program 40 of the fact that the request has been transmitted.

Then, when the request transmission notice is transmitted from the thread 42-1, the client program 40 releases the association between the object 43-1 and the thread 42-1 and returns the thread 42-1 to the thread pool 41 (step T4). Further, the client program 40 discards the object 43-1 having the client process (step T5).

As a result, the thread 42-1 that executes the client process ends.
Meanwhile, in the reception standby loop process thread 44, after step T1 described above, the select function is on standby for the data representing the transmission start of the response transmitted from the server program 50.
Here, the select function ends when the data representing the transmission start of the response is received or when a designated timeout time elapses, and control is returned to the thread 44 as described above.

For this reason, the thread 44 determines whether or not the recovery from the select function is caused by a timeout (step T6).
In the thread 44, when it is determined that the recovery from the select function is made by the timeout, the thread 44 calls the select function again and enters the reception standby state (Yes route in step T6).

However, when it is determined that the recovery from the select function is made because the reception of the response becomes possible by non-blocking (No route in step T6), the response receiving process executed by the thread 44 receives the response transmitted from the server program 50. At this time, the thread 44 acquires the initial address 45 of the object 43-2 having the response process, which is added to the response (step T7).

Further, the thread 44 executed by the response receiving process borrows a free thread from the thread pool 41 (step T8). Then, the thread 44 associates the free thread (here, the thread 42-3) with the acquired initial address 45 of the object 43-2 having the response process, and starts the thread 42-3 that performs the response process (step T9).

Next, the thread 42-3 performing the response process executes the response process on the response received by the thread 44 (step T10).
When the thread 42-3 ends the response process, the client program 40 releases the association between the object 43-2 and the thread 42-3 and returns the thread 42-3 to the thread pool 41 (step T11). Further, the client program 40 discards the object 43-2 having the response process (step T12).

As a result, the thread 42-3 performing the response process ends.
Through the above-described process, the client-server communication is performed.
As described above, according to the managing unit 21-1 and the processing unit 21-2 as an example of the present embodiment, when the request is transmitted from the client process (the first process) among a plurality of processes, that is, the object 43-1 having the client process through the processing unit 21-2, the managing unit 21-1 releases the thread 42-1 assigned to the client process (the first process) to be the free thread. Then, the managing unit 21-1 ends the client process (the first process). In other words, the managing unit 21-1 deletes the object 43-1 having the client process from the storage area of the storage unit 22.

In addition, when the processing unit 21-2 receives the response to the request, the managing unit 21-1 assigns the free thread to the response process of performing the process related to the response among a plurality of processes. In other words, the managing unit 21-1 assigns the object 43-2 having the response process to the free thread 42-3.
As described above, according to the present embodiment, the client process (the object 43-1) that transmits the request is separated from the response process (the object 43-2) that executes the process related to the response. As a result, after the processing unit 21-2 transmits the request, the managing unit 21-1 releases the thread 42-1 assigned to the client process (the first process) to be the free thread. In other words, the managing unit 21-1 can release the association between the object 43-1 having the client process and the thread 42-1 and thus can release the storage area of the storage unit 22 that stores the object 43-1.

Thus, the storage area of the storage unit 22 can be used for other uses, and the storage area can be effectively used.
In addition, since the thread 42-1 is released and used as the free thread, the thread 42-1 can be used in other processes, the thread can be effectively used, and the processing performance of the client program 40 can be improved.

After the thread 44 receives the response, the managing unit 21-1 assigns a free thread to the response process (the second process). In other words, since the managing unit 21-1 assigns the free thread 43-3 to the object 43-2 having the response process, it is possible to make the thread 43-3 remain as the free thread until the response is received after the request is transmitted.

Thus, the thread 42-3 can be used in other processes until the thread 44 receives the response, the thread can be effectively used, and the processing performance of the client program 40 can be improved. Further, according to the managing unit 21-1 and the processing unit 21-2 as an example of the present embodiment, the processing unit 21-2 adds the identification information used to identify the response process (the second process), that is, the initial address 45 of the object 43-2 having the response process in the present embodiment, and transmits the request including the identification information. Then, when the response to which the identification information added to the request is added by the server program 50 serving as the transmission destination of the request is received by the processing unit 21-2, the managing unit 21-1 assigns the free thread to the response process (the second process) of executing the process related to the response based on the identification information added to the response received by the processing unit 21-2. In other words, the managing unit 21-1 assigns the object 43-2 having the response process to the free thread 42-3.

As described above, the processing unit 21-2 adds the identification information used to specify the process to be resumed by the client program 40 after receiving the response from the server program 50 to the request to be transmitted in the client process (the first process). In the present embodiment, the processing unit 21-2 adds the initial address 45 of the object 43-2 having the response process to the request to be transmitted as the identification information used to identify the response process (the second process). Thus, even when the client program 40 ends the object 43-1, the thread 44 can reliably specify the object 43-2 having the response process based on the identification information at the time of reception of the response and execute the response process, that is, the resuming process of the client program 40.

In addition, the managing unit 21-1 as an example of the present embodiment includes the thread pool 41 that generates a plurality of threads 42 in advance and manages the threads 42.
As described above, the managing unit 21-1 generates a plurality of threads 42 in advance and holds the threads 42 in the thread pool 41, and thus the client process (the first process), the response process (the second process), the reception standby loop process, the response receiving process, or the like can be assigned to an existing free thread. Thus, the client program 40 (the managing unit 21-1) does not need to generate the thread each time the client process, the response process, the reception standby loop process, the response receiving process, or the like is assigned, and thus the processing performance of the client program 40 can be improved.

### (B) Modified Example of First Embodiment

### (B-1) Configuration of Modified Example of First Embodiment

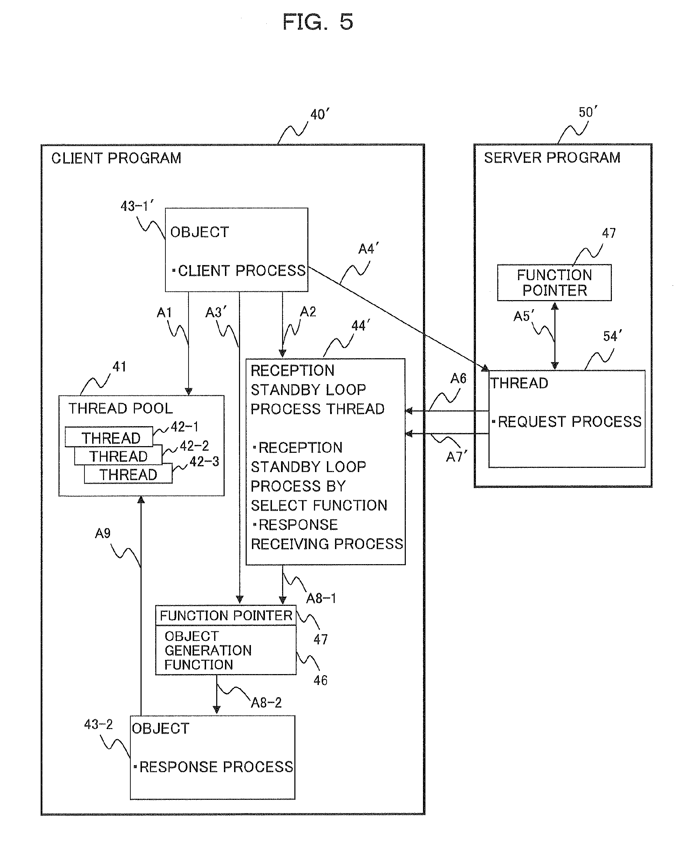

The client program 40 and the server program 50 according to an example of the first embodiment are not limited to the above-described operation and may be executed as in a modified example of the first embodiment which will be described with reference to Figs. 5 to 7 as an example.

A client program 40' and a server program 50' according to this modified example have the same configurations as the client program 40 and the server program 50 according to an example of the first embodiment unless otherwise set forth in the following, and thus a description thereof will not be made.
In the present modified example, a function pointer 47 of a generation function 46 that generates the object 43-2 is added to the request by the thread 42-1 as the identification information used to identify the object 43-2 instead of the initial address 45 of the object 43-2.

Fig. 5 is a diagram illustrating a configuration example of the client program 40' and the server program 50'.
The client program 40' includes an object 43-1' and a reception standby loop process thread 44' instead of the object 43-1 and the reception standby loop process thread 44, compared to the client program 40 of Fig. 2 described above.

Further, the client program 40' newly includes an object generation function 46 and a function pointer 47.
The object 43-1' is different from the object 43-1 illustrated in Fig. 2 in that the processing unit 21-2 adds the function pointer 47 of the generation function 46 that generates the object 43-1 to the request to be transmitted in the thread 42-1.

The reception standby loop process thread 44' (hereinafter, also referred to simply as a thread 44') extracts the function pointer 47 of the generation function 46 generating the object 43-2 added to the response by the server program 50' in the response receiving process by the processing unit 21-2, which will be described later. Then, the thread 44' calls the generation function 46 generating the object 43-2 having the response process by the extracted function pointer 47 through the processing unit 21-2 and generates the object 43-2. Further, the thread 44' borrows a free thread from the thread pool 41 through the managing unit 21-1, associates the thread with the extracted object 43-2 that performs the response process, and executes the thread 42-3 that performs the response process.

As described above, in the present modified example, after the client program 40' starts up, the object 43-2 is not generated until the thread 44' extracts the function pointer 47 from the response received from the server program 50'.
In the following description, the managing unit 41-1 (sic; correctly "21-1") is assumed to assign the thread 42-1 to the object 43-1' and assign the thread 42-3 to the object 43-2. Further, the managing unit 21-1 is assumed to assign the thread 42-2 in the thread pool 41 to the reception standby loop process by the select function and the response receiving process. Thus, for the sake of convenience, the reception standby loop process thread 44' is denoted by a reference numeral 44', but the reception standby loop process thread is actually the thread 42-2 that is included in the thread pool. Hereinafter, the reception standby loop process thread 44' is also referred to as the thread 42-2.

The server program 50' includes a thread 54' instead of the thread 54, compared to the server program 50 of Fig. 2 described above.
The thread 54' extracts the function pointer 47 added to the received request from the client program 40', and stores the extracted function pointer 47 in the storage unit 32. Then, the thread 54' adds the function pointer 47 stored in the storage unit 32 to the response that is the processing result of the request, and transmits the resultant response to the reception standby loop process thread 44'.

### (B-2) Operation of Modified Example of First Embodiment

Next, operations of the client program 40' and the server program 50' will be described.
In the process illustrated in Fig. 5, A3' to A5' and A7' are executed instead of A3 to A5 and A7 illustrated in Fig. 2, and A8-1 and A8-2 are newly executed. In addition, in the process illustrated in Fig. 5, A8 illustrated in Fig. 2 is not executed.

In the drawings, processes denoted by the same reference numerals as the above-described reference numerals represent the same or almost the same processes, and thus a description thereof will not be partially made.
Hereinafter, an example in which the thread 44' executes the reception standby loop process of the response, by the select function, from the server program 50 through the processing unit 21-2 will be described.

The thread 42-1 that executes the client process acquires the function pointer 47 of the generation function 46 of the object 43-2 having the response process, and adds the acquired function pointer 47 to arbitrary request data to be transmitted to the server program 50' (see A3' in Fig. 5).
Thereafter, the thread 42-1 transmits the arbitrary request including the function pointer 47 to the server program 50' (see A4' in Fig. 5).

The thread 54' of the server program 50' is on standby for the transmission of the arbitrary request from the client program 40', receives the transmitted request, and extracts the function pointer 47 added to the request. Further, the thread 54' interprets the received request, and executes an arbitrary process corresponding to the request through the thread 54 that performs the request process. In addition, the thread 54 adds the extracted function pointer 47 to the response that is the result of the request process (see A5' in Fig. 5).

Next, in order to transmit the response to the client program 40', the thread 54' transmits data representing a transmission start to the client program 40' (see A6' (sic; correctly "A6") in Fig. 5).
Then, after transmitting the data representing the transmission start to the client program 40', the thread 54' transmits the response including the function pointer 47 to the client program 40' (see A7' in Fig. 5).

In the client program 40', the reception standby loop process thread 44' receives the data representing the transmission start. Then, the thread 44' reads the generation function 46 from the function pointer 47 added to the received response in the response receiving process (see A8-1 in Fig. 5), executes the generation function 46, and generates the object 43-2 (see A8-2 in Fig. 5).

In addition, the thread 44' borrows a free thread from the thread pool 41. Then, the thread 44' associates the generated object 43-2 with the borrowed thread (here, the thread 42-3) (see A9 in Fig. 5).
Thereafter, the client program 40' executes the response process in the object 43-2 generated as described above through the processing unit 21-2.

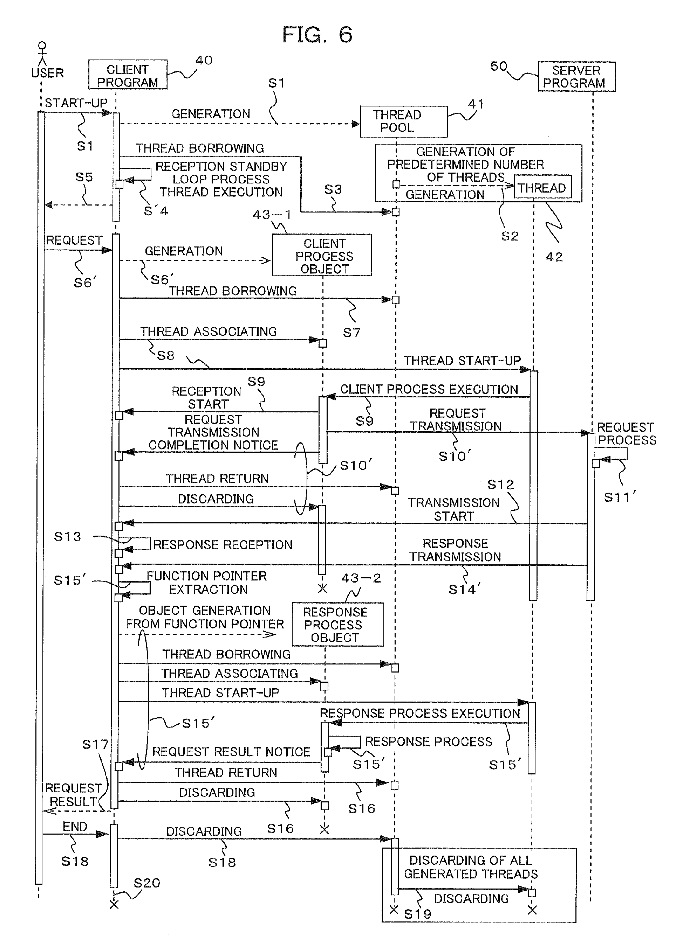

Next, a detailed process in the client program 40' and the server program 50' will be described with reference to Fig. 6.
Fig. 6 is a sequence diagram for describing the process of the client program 40' and the server program 50'.
In the process illustrated in Fig. 6, steps S6', S10', S11', S14', and S15' are executed instead of steps S6, S10, S 11, S 14, and S 15 illustrated in Fig. 3.

In the drawings, steps denoted by the same reference numerals as the above-described reference numerals represent the same or almost the same processes, and thus a description thereof will not be partially made.
Hereinafter, an example in which the user makes an arbitrary request to the client program 40 through the processing unit 21-2 will be described.
The client program 40 generates the object 43-1 having the client process (step S6').

At this time, in the present modified example, the storage area of the storage unit 22 occupied by the object 43-2 having the response process can be used in other processes.
Further, the object 43-1 is associated with the thread 42-1, the thread 42-1 is executed, and the reception start instruction is given to the reception standby loop process thread 44' in the reception start instruction standby state (steps S7 to S9).

Then, the thread 42-1 that executes the client process included in the object 43-1' transmits the request to the server program 50' (step S10').
At this time, in the present modified example, the thread 42-1 adds the function pointer 47 of the generation function 46 that generates the object 43-2 having the response process to the request and transmits the resultant request, and when the transmission is completed, the thread 42-1 notifies the client program 40' of the request transmission completion. When the request transmission notice is transmitted, the client program 40' returns the borrowed thread 42-1 to the thread pool 41, and discards the generated object 43-1'.

Thus, the client program 40 can use the storage area of the storage unit 22 in which the object 43-1 has been developed in other processes. Further, the thread 42-1 associated with the object 43-1 is returned and becomes the free thread, and thus the client program 40 can assign the thread 42-1 to other processes.

Next, the server program 50' receives the request, and the thread 54' executes an arbitrary process on the request (step S 11').
At this time, in the present embodiment, the thread 54' extracts the function pointer 47 added to the received request, and temporarily holds the function pointer 47 in the storage unit 32 of the server terminal 30 or the like.

Further, the server program 50' notifies the client program 40 of the transmission start of the response, and the client program 40' executes the response receiving process through the reception standby loop process thread 44' (steps S12 and S13).
Next, the thread 54' of the server program 50' transmits the response to the client program 40' (step S14').

At this time, in the present modified example, the thread 54' extracts the function pointer 47 of the generation function 46 that generates the object 43-2 having the response process, which is temporarily held in the storage unit 32 or the like, adds the function pointer 47 to the response, and transmits the resultant response. In the present modified example, when the thread 44' completes the reception of the response, the thread 44' extracts the function pointer 47 of the generation function 46 that generates the object 43-2 having the response process from the received response. Then, the thread 44' calls the generation function 46 and generates the object 43-2. Further, the thread 44' borrows a free thread from the thread pool 41, and associates the generated object 43-2 with the free thread (here, the thread 42-3). In addition, the thread 44' causes the thread 42-3 to start up. Then, the thread 42-3 executes an arbitrary response process, and notifies the client program 40' of the result of the response process (step S 15').

Thereafter, in steps S16 to S20, the thread 42-3 is returned, the object 43-2 is deleted, and the client program 40 transfers the result of the request to the user (steps S16 and S17).
Further, when the user ends the client program 40, the client program 40 ends (steps S 18 to S20).

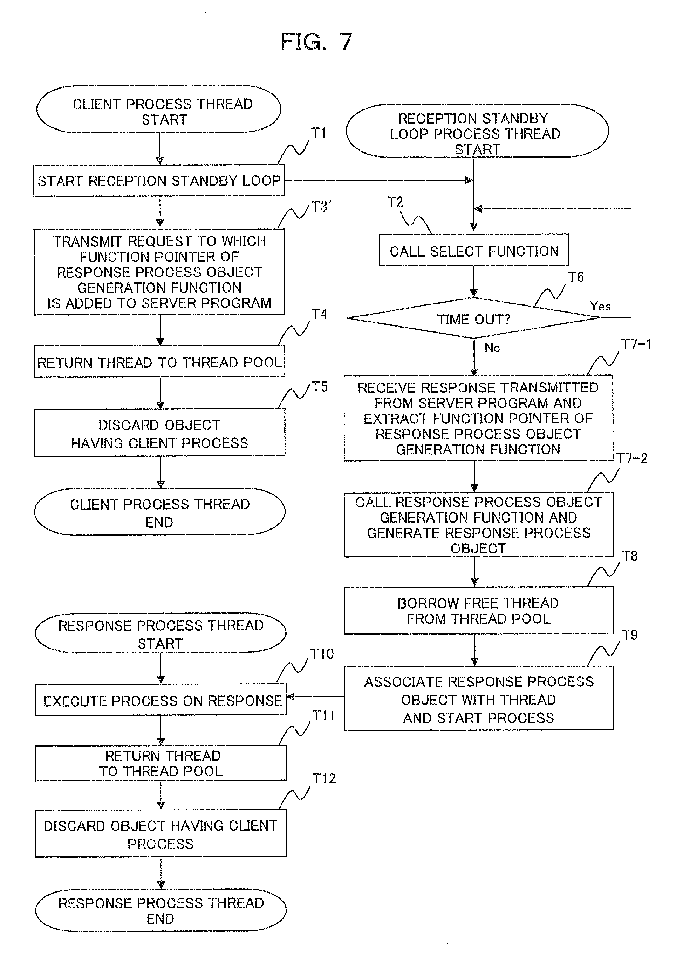

In the present embodiment, the request and response process are performed between the client terminal 20 and the server terminal 30 as described above.
Next, the process (steps S8' to S16 in Fig. 6) until the thread 42-3 is discarded after the thread 42-1 starts up in the process of the threads 42-1 to 42-3 will be described in further detail with reference to Fig. 7.

Fig. 7 is a flowchart for describing the process of the thread 42-1 performing the client process, the thread 42-2 (the reception standby loop process thread 44) performing the reception standby loop process, and the thread 42-3 performing the response process in the client program 40'.
In the process illustrated in Fig. 7, steps T3' and T7-1 are executed instead of steps T3 and T7 illustrated in Fig. 4, and step T7-2 is newly executed.

In the drawings, steps denoted by the same reference numerals as the above-described reference numerals represent the same or almost the same processes, and thus a description thereof will not be partially made.
Hereinafter, an example in which the reception standby loop process thread 44 that receives the reception start instruction from the thread 42-1 is on standby for the data representing the transmission start of the response will be described.

When the thread 42-1 instructs the reception standby loop process thread 44' to start the reception, the thread 42-1 transmits an arbitrary request to the server program 50' (step T3').
At this time, the thread 42-1 adds the function pointer 47 of the generation function 46 that generates the object 43-2 having the response process to the request, transmits the resultant request, and notifies the client program 40' of the fact that the request has been transmitted.

Then, the thread 42-1 returns to the thread pool 41, and the object 43-1 is discarded (steps T4 and T5).
Thus, the thread 42-1 that executes the client process ends.
Meanwhile, when the reception standby loop process thread 44 receives the data representing the response transmission start from the server program 50' (No route in step T6), the response receiving process executed by the thread 44' receives the response transmitted from the server program 50'. At this time, the thread 44 acquires the function pointer 47 of the generation function 46 that generates the object 43-2 having the response process, which is added to the response (step T7-1).

Then, the thread 44' calls the generation function 46 from the acquired function pointer 47 and generates the object 43-2 having the response process (step T7-2).
Thereafter, the client program 40' associates the object 43-2 generated by the generation function 46 with the thread 42-3 and executes the response process through the process of step T8 or later.

In the present modified example, the client-server communication is performed by the above-described process.
As described above, according to the managing unit 21-1 and the processing unit 21-2 as an example of the present embodiment, the same effects as in the first embodiment are obtained.
Further, the processing unit 21-2 adds the function pointer 47 of the generation function 46 generating the object 43-2 having the response process (the second process) to the request, and transmits the resultant request to the server program 50'. Then, after receiving the response including the function pointer 47, the processing unit 21-2 calls the generation function 46 from the function pointer 47 and generates the object 43-2 having the response process.

Thus, in the processing unit 21-2, until the response is received after the request is transmitted, the object 43-2 having the response process is not generated, and the storage area of the storage unit 22 is not used. Thus, the storage area can be effectively used.

### (C) Others

The exemplary embodiments of the present invention have been described above, but the present invention is not limited to these specific embodiments, and various kinds of modifications or changes can be made within a range not departing from the gist of the present invention.

For example, the process in the managing unit 21-1 and the processing unit 21-2 included in the client terminal 20 or 20' in communication of a client-server type has been described with reference to Figs. 1 to 7, but the preset invention is not limited to this example.
For example, the processing unit 21-2 may transmit the request to another thread or another program that is executed by a CPU in the own terminal. In this case, another thread or another program transmits the response to the request received from the processing unit 21-2 to the processing unit 21-2.

As described above, the managing unit 21-1 and the processing unit 21-2 can be used not only in communication of the client-server type, but also in communication with another thread or another program executed by a CPU in the own terminal.
Further, the CPU 21 of the client terminal 20 or 20' functions as the managing unit 21-1 and the processing unit 21-2 by executing the multithread program.

For example, a program (a multithread program) for implementing the functions as the managing unit 21-1 and the processing unit 21-2 is provided in the form in which the program is recorded on a computer-readable recording medium, such as a flexible disk, a CD (CD-ROM, CD-R, CD-RW or the like), a DVD (DVD-ROM, DVD-RAM, DVD-R, DVD+R, DVD-RW, DVD+RW, HD DVD or the like), a Blu-ray disc, a magnetic disk, an optical disc, or a magneto-optical disk. Further, a computer reads the program from the recording medium, transfers the program to be stored in an internal storage device or an external storage device, and uses the program. For example, the program may be recorded in a storage device (a recording medium) such as a magnetic disk, an optical disc, a magneto-optical disc, and may be provided to the computer from the storage device via a communication line.

In order to implement the functions as the managing unit 21-1 and the processing unit 21-2, the program stored in the internal storage device (in the present embodiment, the storage unit 22 of the client terminal 20 or 20') is executed by a microprocessor of the computer (in the present embodiment, the CPU 21 of the client terminal 20 or 20'). At this time, the program recorded in the recording medium may be read and executed by the computer.

In addition, in the present embodiment, the computer has a concept including hardware and an operating system (OS), and refers to the hardware operating under control of the OS. Further, when an OS is not necessary and hardware is operated by an application program solely, the hardware corresponds to the computer. The hardware includes at least a microprocessor such as a CPU and a device that reads out a computer program recorded in the recording medium, and in the present embodiment, the client terminals 20 and 20' have the function as the computer.

### REFERENCE SIGNS LIST

10, 100: Client-server communication system 20, 200: Client terminal
21,210,31,310: CPU
21-1, 31-1: Managing unit
21-2, 31-2: Processing unit
22, 220, 32, 320: Storage unit
23, 230, 33, 330: Transceiving unit
25, 250: Network
30, 300: Server terminal
40, 400: Client program
41, 410: Thread pool
42-1 to 42-3, 420-1 to 420-3: Thread
43-1, 43-2, 430: Object
44, 440: Reception standby loop process thread
45: Initial address
46: Object generation function
47: Function pointer
50, 500: Server program
54, 540: Server program side thread

## Claims

1. A multithread processing device, comprising:
a managing unit that assigns a free thread among a plurality of threads to at least one of a plurality of processes; and
a processing unit that executes the one process to which the free thread is assigned by the managing unit, wherein
when a request is transmitted from a first process among the plurality of processes by the processing unit, the managing unit releases a thread assigned to the first process to be a free thread, and ends the first process; and
when a response to the request is received by the processing unit, the managing unit assigns a free thread to a second process of executing a process related to the response among the plurality of processes.

2. The multithread processing device according to claim 1, wherein
the processing unit adds identification information used to identify the second process and transmits the request; and
when the response, to which the identification information added to the request is added by a transmission destination of the request, is received by the processing unit, the managing unit) assigns a free thread to the second process based on the identification information added to the response received by the processing unit.

3. The multithread processing device according to claim 2, wherein
the identification information is an initial address of an object having the second process.

4. The multithread processing device according to claim 2, wherein
the identification information is a function pointer of a function of generating an object having the second process.

5. The multithread processing device according to any one of claims 1 to 4, wherein
the managing unit includes a thread pool that generates the plurality of threads in advance and manages the plurality of threads.

6. The multithread processing device according to any one of claims 1 to 5, wherein
before the processing unit transmits the request,
the managing unit assigns a process of receiving the response to the request as a reception standby thread to the free thread; and
the processing unit starts a process of receiving the response through the reception standby thread.

7. The multithread processing device according to any one of claims 1 to 6, wherein
the processing unit and the managing unit are included in a central processing unit (CPU);
the processing unit transmits the request to another thread or another program executed by the CPU; and
the other thread or the other program transmits the response to the request received from the processing unit to the processing unit.

8. A multithread processing system, comprising:
the multithread processing device according to any one of claims 1 to 6; and
another device connected to perform communication with the multithread processing device, wherein
the processing unit transmits the request to the other device; and
the other device transmits the response to the request received from the processing unit to the multithread processing device.

9. A multithread processing program that causes a computer to function as:
a managing unit that assigns a free thread among a plurality of threads to at least one of a plurality of processes; and
a processing unit that executes the at least one process to which the free thread is assigned by the managing unit, wherein
when a request is transmitted from a first process among the plurality of processes by the processing unit, the managing unit releases a thread assigned to the first process to be a free thread, and ends the first process; and
when a response to the request is received by the processing unit, the managing unit assigns a free thread to a second process of executing a process related to the response among the plurality of processes.

10. The multithread processing program according to claim 9, wherein
the processing unit adds identification information used to identify the second process and transmits the request; and
when the response, to which the identification information added to the request is added by a transmission destination of the request, is received by the processing unit, the managing unit assigns a free thread to the second process based on the identification information added to the response received by the processing unit.

11. The multithread processing program according to claim 10, wherein
the identification information is an initial address of an object having the second process.

12. The multithread processing program according to claim 10, wherein
the identification information is a function pointer of a function of generating an object having the second process.

13. The multithread processing program according to any one of claims 9 to 12, wherein
the managing unit includes a thread pool that generates the plurality of threads in advance and manages the plurality of threads.

14. The multithread processing program according to any one of claims 9 to 13, wherein
before the processing unit transmits the request;
the managing unit assigns a process of receiving the response to the request as a reception standby thread to the free thread; and
the processing unit starts a process of receiving the response through the reception standby thread.

15. A multithread processing method of assigning a free thread among a plurality of threads to at least one process of a plurality of processes and executing the at least one process to which the free thread is assigned, the method comprising:
when a request is transmitted from a first process among the plurality of processes, releasing a thread assigned to the first process to be a free thread and ending the first process; and
when a response to the request is received, assigning a free thread to a second process of executing a process related to the response among the plurality of processes.
